# EUROPEAN PATENT SPECIFICATION

(11) **EP 1 450 624 B1**
(45) Date of publication and mention of the grant of the patent: **23.11.2011**
(21) Application number: 02788086.3
(22) Date of filing: 09.12.2002
(51) Int. Cl.: A23K 3/03, A01F 25/13, A01F 15/00

(54) **NEW SILAGE MAKING METHOD AND APPARATUS**
NEUES SILAGE VERFAHREN UND APPARAT
PROCEDE ET DISPOSITIF DE PRODUCTION D'ENSILAGE

(30) Priority: 10.12.2001 NO 20016020
(43) Date of publication of application: 01.09.2004
(73) Proprietor: Kuhn-Geldrop B.V., 5667 KP Geldrop (NL)
(72) Inventor: NES, Asbjorn, N-6878 Veitastrong (NO); AMSTELL, Leon, Van, NL-6553 RW Geldrop (NL); ORR, William, McLean, Urquhart-Dykes & Lord, Merrion Way, Leeds LS2 8PA (GB)
(74) Representative: Raynor, Simon Mark
(86) International application number: PCT/GB2002/005578
(87) International publication number: WO 2003/053160

(56) References cited:
- GB-A- 2 317 895
- US-A- 2 776 890
- US-A- 3 485 635
- US-A- 4 247 561
- US-A- 4 540 586
- US-A- 4 859 480
- US-A- 5 020 311
- DATABASE WPI Section Ch, Week 199346 Derwent Publications Ltd., London, GB; Class A97, AN 1993-366202 XP002234671 & SU 1 771 656 A (DON SCI PRODN ASSOC), 30 October 1992 (1992-10-30)
- DATABASE WPI Section Ch, Week 199334 Derwent Publications Ltd., London, GB; Class D13, AN 1993-271224 XP002234672 & SU 1 757 586 A (DON SCI PRODN ASSOC), 30 August 1992 (1992-08-30)

## Description

The invention is concerned generally with the ensilage of a fodder mass, and in particular to provide a new and improved method for preserving fodder as well as machines to perform such methods.

It is well known to preserve fodder by ensilage, in which the fodder is preferably compacted and thereafter airtight enclosed. After a certain time lactic acid bacteria present will produce lactic acid to lower the ph value of the fodder. Due to the ph drop, all other bacterial activity (rotting) is stopped and a stable condition in the enclosed fodder is created. This method is well known for fresh grass and wilted grass, chopped maize plants, but is also known for other fodder, such as beet leaves, or potato chips or beet waste. The grass or wilted grass can be compacted by means of a square or round baler, or is compacted in a place of storage (pit / clamp) by its own weight and / or by driving over with a tractor or loader. Another well known way of storing silage is in a tower silo. After the compaction, an airtight enclosure is formed over a silage pit with a plastics sheet. For round or square bales, stretched plastics film is completely wrapped around the bale,

An alternative method with bales is piling them to form a stack, and covering the stack with a plastics sheet. When silage is required for feeding farm animals, the clamp is partly opened and the required silage is taken out. The clamp is left partly open, ready for the next discharge, and therefore oxygen can penetrate into the clamp, so that a minimum speed of discharge is needed to prevent mould, or other deterioration in the silage. Before taking silage from wrapped bales, the film first has to be stripped from the bale.

Storing fodder by ensilage has been proved to be a reliable and cost effective way of conserving fodder. However, the plastics used for making the silage airtight is nondegradable and therefore needs to be collected. If re-used, contamination with sand and silage gives a big problem.

US 4540586 describes a method of preserving fodder masses for animal feeding by applying an acid catalyzed coating liquid to the surfaces of the fodder masses. The coating liquid forms a water insoluble solid barrier to the penetration of moisture, air, and other elements which can cause degradation of stored fodder.

US 3485635 describes a process for producing silage comprising placing fodder crops in a silo and applying a molten wax material to form a water and air impermeable cover sheet over the silage.

US 2776890 describes a method for protecting silage comprising spreading a cellulose powder of the fodder mass and providing moisture to form a coating that protects the fodder from air.

US 4247561 describes a method of making an emulsified, liquid starch product. The product is nutritional and can be used as a grain and silage sealer.

US 4859480 describes a method of preserving agricultural materials such as hay and silage, which comprises spraying the material with a liquid that penetrates the material to form a water-repellent protective coating. The coating may include a preserving agent having substantial antimicrobial activity and an adhesive enabling outer layers of material to be tightly bound in the material being treated.

US 502031 relates to a device for producing highly compressed cylindrical bales from loose stalk material, which is picked up and compressed to form a rotating compressed roll that flows continuously in an axial direction. Individual roll sections (bales) are successively cut off from the front end of the compressed roll. The compressed roll is bound automatically by a binder before a bale is cut off.

According to the invention, there is provided a method of ensilage of a fodder mass as defined in claim 1.

Preferred developments of the method are set out in dependent claims 2 to 22.

According to a further aspect of the invention there is provided apparatus as defined in claim 23.

Preferred features of the apparatus are set out in dependent claims 24 to 26.

Preferred examples of the invention will now be described in detail, with reference to the accompanying drawings, in which:
Figure 1 is a perspective illustration of a conventional silage clamp, in which a compressed fodder mass is confined in a trench or walled enclosure (which is opened for discharge of the fodder after fermentation), and a plastics sheet covers the exposed surfaces of the fodder mass so as to exclude air and water and allow fermentation to take place;
Figure 1a is a detail of Figure 1, showing how it is necessary to hold down the plastics sheet with one or more external weights;
Figure 2 is a view, similar to Figure 1, of a silage clamp in which the exposed surfaces of the fodder mass are coated with a curable or settable gel coating which forms a protective air and water-tight foamed covering (also opened for discharge of the fodder after fermentation);
Figure 2a is a detail illustration of part of Figure 2, showing diagrammatically how outwardly projecting elements of the fodder mass e.g. stem material, become embedded in the foamed covering (this embedding in the foamed cover layer may also arise in subsequent examples of the invention described below with reference to the further figures of drawings);
Figure 3 is a diagrammatic illustration of conventional wrapping of a cylindrical and a square bale of compressed fodder e.g. partly wilted grass;
Figure 4 illustrates an example of the invention, in which a cylindrical bale and a square bale are covered completely by a subsequently applied foamable gel coating;
Figure 4a illustrates a modification of the example of Figure 4, in which there is combined gel coating and film coverage of the bale;
Figure 5 illustrates conventional formation of stacks of cylindrical and square bales, which are covered with air and watertight plastics sheets;
Figure 6 illustrates a further example of the invention, in which the exposed surfaces of the stacks are covered with a foamed gel coating.

### Example 1 (silage clamp)

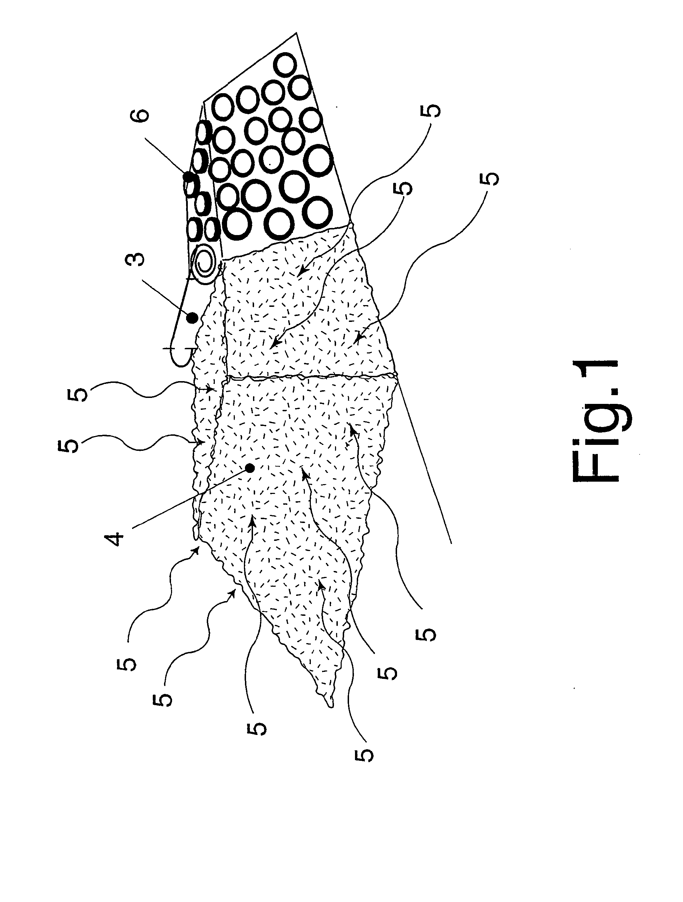

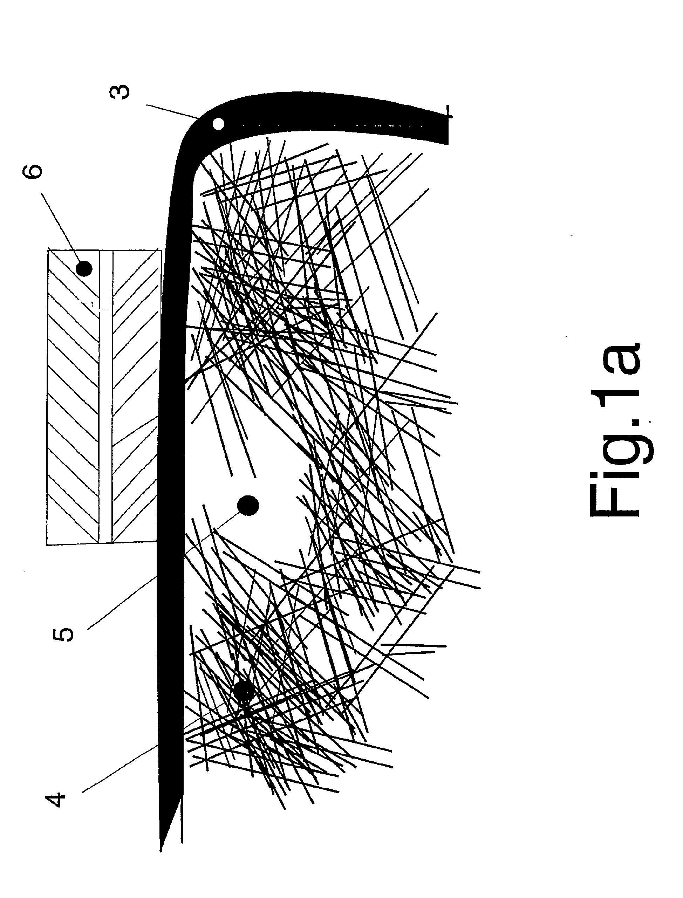

Referring now to Figure 1 of the drawings, this shows a conventional silage clamp in which fodder is collected from the field and put into e.g. a trench silo (clamp or pit) by means of a loader. While bringing the fodder into the silo, the fodder is instantly compressed by riding over the fodder with the loader (to expel air from the fodder). When all the fodder has been put into the silo to form a compressed fodder mass 4, the silo is made airtight by means of putting a plastics sheet 3 over the top and the sides of the fodder mass. The sheet 3 is stabilised by putting on sand or heavy articles 6 so the wind will not get a grip on it. Also, the top layer of the fodder is compressed by this sand. The sides are made airtight to the ground by digging them into the ground.

Over a period of time, the fodder mass 4 ferments to form silage.

Figure 1a is a detail showing how a large and heavy mass 6 is required to hold down the sheet 3 on the fodder mass 4. Reference 5 shows how external air can gain access to the fodder mass 4 when the sheet 3 is partly removed.

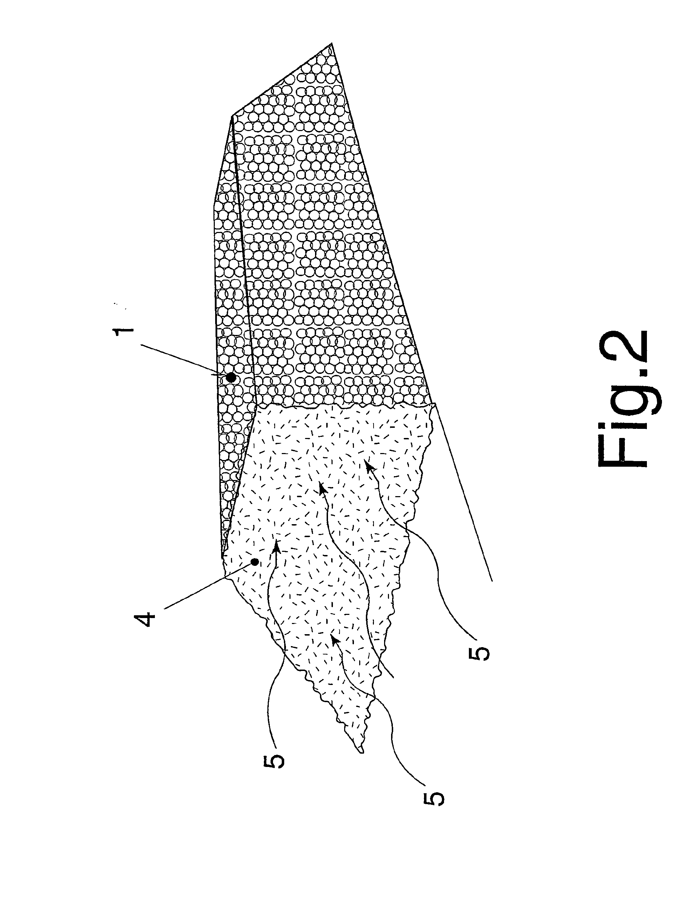

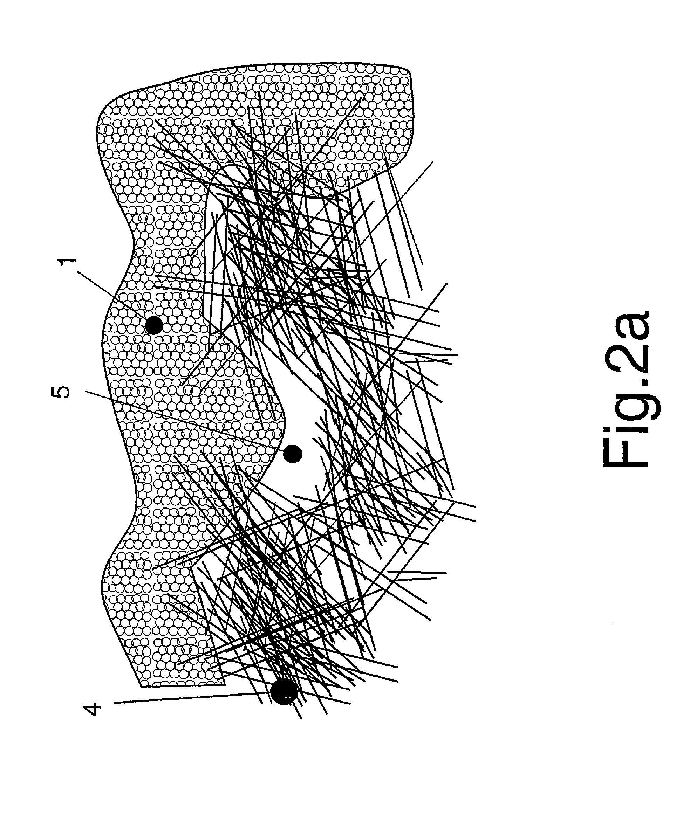

Referring now to Figures 2 and 2a, an alternative silage clamp will now be described. Thus, instead of making the trench silo airtight by means of a plastic sheet (as per Figure 1), the silo is made airtight by applying a gel coating 1 to the exposed surfaces of the fodder mass 4, and in which the gel is preferably a foamed gel.

An advantage to using the gel is that it is easier to apply on the silo than the plastics sheet 3. Advantage of using a foaming gel is that less gel material is needed, because the foam will bridge the gaps or interstices between the fodder elements. Also, upon opening the clamp, the gel does not have to be removed from the silo because it will preferably be made of a material which can be safely eaten by animals,

When the pit is opened, the gel sticks tightly to the silo so that only the opened side of the pit will be penetrated with oxygen 5, and any possible moulding will only start from there. When a sheet is used (as in Figure 1), it needs to be removed before taking away the silage for feeding to the animals, and moulding will start also on the surface where the sheet is taken away. When adding a second load of fodder after closing the pit, the plastics sheet also has to be removed and oxygen can again enter the pit. When applying an edible gel (in the example of the invention), the second load can be put on top of the sealed first load, so that no other oxygen can enter into the first load.

### Example 2 (wrapped bales)

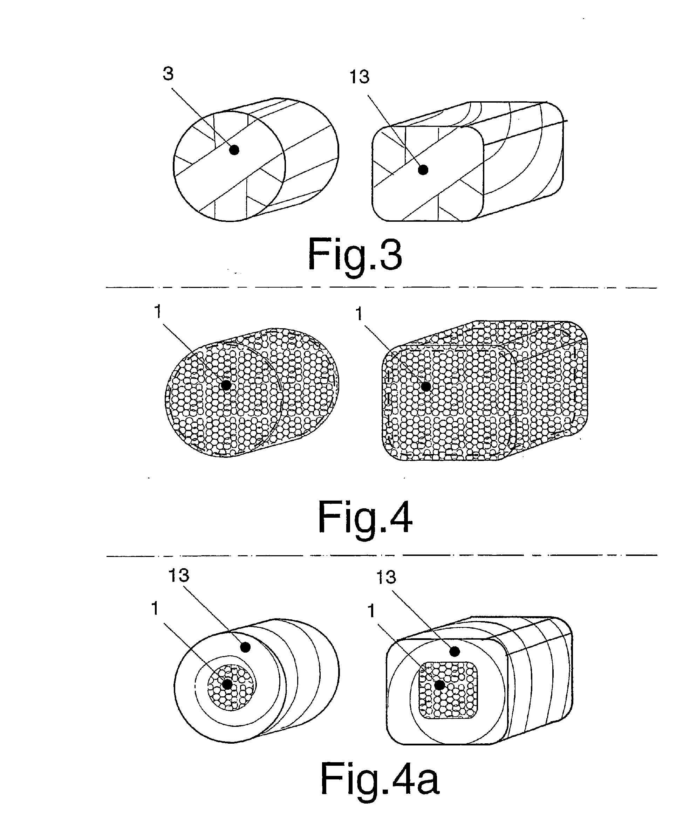

Referring to Figure 3, conventional wrapping of cylindrical and square bales is shown, in which stretch-film wrapping 13 is applied to the exposed surface of the bales.

The fodder is collected from the field and instantaneously compressed to form a round or square bale. After the bale has been compressed, its surface is wrapped with a so-called stretch film.

This wrapping can be done on the compressing machine (an integrated baler / wrapper), or on a separate machine, a so-called wrapper. The wrapped bales are stored on the field, or near the farm. When the silage needs to be fed to the animals, the film wrapping 13 is removed from the bale and the silage can be fed. Removing the film from the bale is a time consuming exercise, and of course also the removed film has to be disposed of safely.

Referring to Figure 4, an example according to the invention will be described, in which a gel coating 1 is applied to the bales. Thus, instead of using a stretch film (as in Figure 3), a (foam) gel coating 1 is applied onto the whole surface of the bale. The advantage is that the stretch film sheet of Figure 3 does not have to be removed from the bale when the silage is being fed to the animals. The gel coating 1 can be applied in situ on the baler (before discharge of the bale); directly after discharge of the bale; or with a special device before or after transportation to the place of storage.

An alternative (in accordance with the invention) is the use of both film (preferably edible) and also a gel coating. This is shown in Figure 4a, and the advantage is that the surface of the bale that is in contact with the ground (or the transporting equipment) is covered with the film wrapping sheet 13, and the other parts are covered with a gel coating 1, The sheet 13 has better instant mechanical properties, and so will not be damaged so quickly, and the gel coating has the advantages that it can be applied on areas of the surface which are difficult to reach. Also, the gel coating could be applied on the same surface with the film, and preferably with an edible film e.g. paper for better airtightness.

Although not shown in detail, examples of apparatus according to the invention will now be described. In particular, there is provided an apparatus for forming a compressed bale of a fodder mass, and which comprises: a bale-forming chamber; means for feeding a fodder mass to the chamber, means for binding the compressed bale to hold its shape, preferably by applying a netting layer (or binding with twine) to enclose at least part of the outer surface of a bale, after formation in the chamber; and means for applying a coating to the outer surface of the bale, such coating being of such a nature as to set and form a substantially airtight and watertight covering on the bale.

Means for applying the coating comprises spray jet nozzles arranged to apply the coating in jet form (a gel coating, and especially a foamed gel) to the outer surface of the bale.

The jet nozzles may be arranged to apply the coating to the outer surface of the bale during, or after the binding of the bale.

Conveniently, the jet nozzles are mounted on the apparatus adjacent to the bale forming chamber (or channel), and are arranged to direct the gel coating onto the outer surface of the bale, and to penetrate the outer surface, whereby upon setting or curing, the coating forms a covering for the entire outer surface of the bale, and which also partly anchors itself into the outer surface of the bale thereby to contribute also to the maintenance of the shape of the bale.

### Example 3 (making a stack of bales)

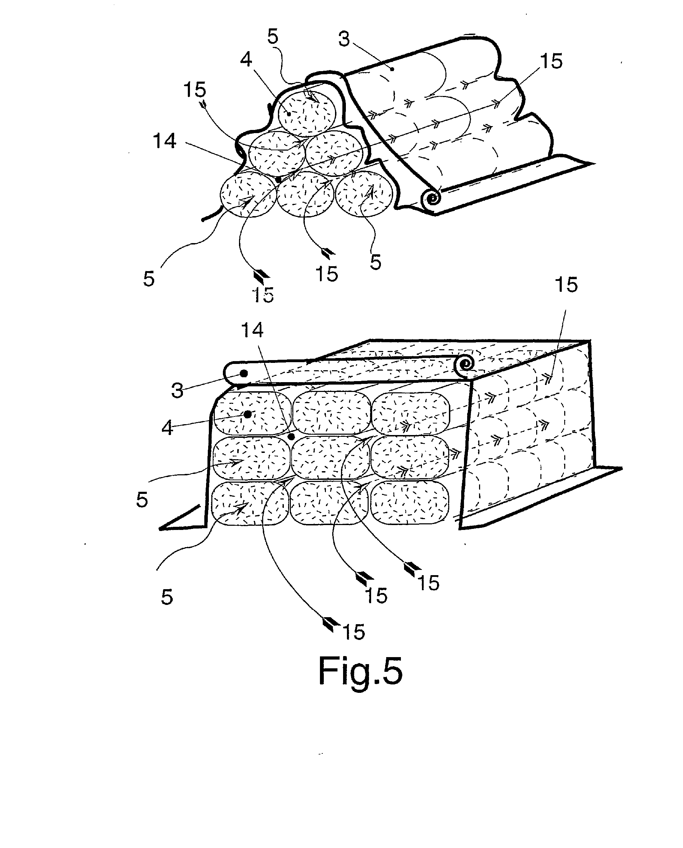

Referring now to Figure 5, this shows a conventional way of covering stacks of bales with air and water-tight sheets, so that fermentation can take place to form silage.

The fodder is collected from the field and compressed into round or square bales 4 of the fodder. The bales are transported to the place where they are stored. There they are piled onto each other to form a stack (pile). The pile is covered with a sheet 3 to make the whole pile airtight, and which then ferments or matures to form a silage mass. Figure 5 shows a rectangular stack formed from square bales, and also a generally triangular stack formed from round bales, and both opened up to allow removal of fermented fodder, and whereby atmospheric oxygen 5 gains access to the interior of the stack.

Also, opening up the stack will expose the gaps 14 (between adjacent bales 4 in the stack) to contact with atmospheric oxygen 15 throughout the interior of the stack, which is clearly disadvantageous.

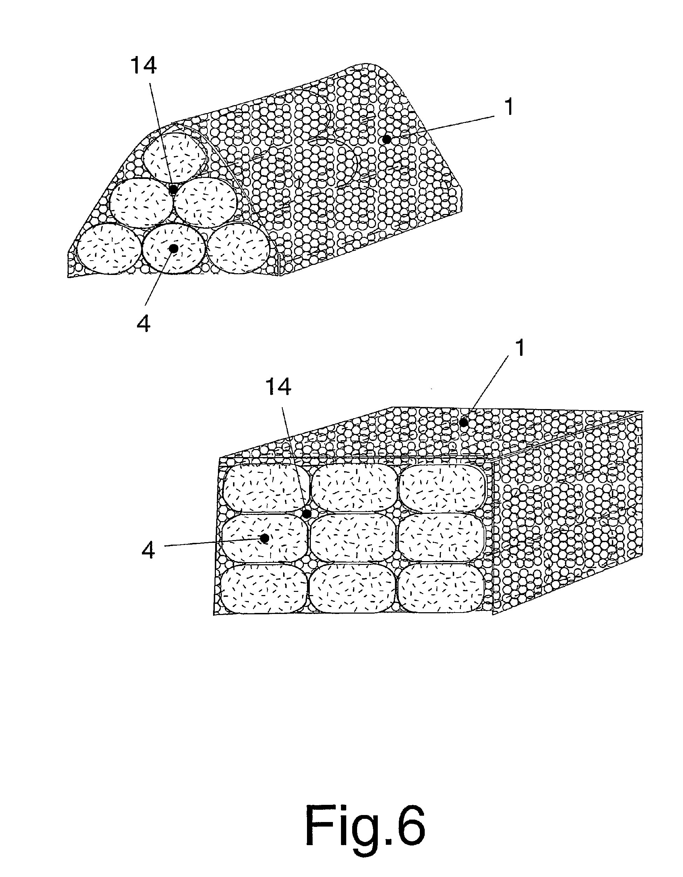

Referring now to Figure 6, this shows the exposed surfaces of the stacks covered with a gel coating 1, according to a further example of the invention. Thus, instead of covering the pile with a sheet 3, the stack is made airtight by applying a gel coating on the surface of the stack. The advantage is that the sheet does not have to be removed from the stack, when the silage is fed to the animals and the gel coating is easy to apply, especially on the vertical surfaces.

Also gel is used to fill the gaps between the bales in the stack, which gives the advantage that when the stack is opened for feeding, the oxygen 15 cannot penetrate into the stack and start the moulding at the opposite side of the opening of the stack.

Another application of the gel coating is for using the gel as a temporary cover when the feeding of the silage has started, The needed amount of silage is taken out of the clamp or bale, and the opened surface is closed again with the gel coating, to prevent oxygen to enter the pit. This is an advantage, especially when small quantities of silage are required and the weather circumstances for moulding are good (warm weather).

### Applying the gel on the clamp, stack or bale

The gel will be applied on the surface.

The gel could be applied by pouring the gel onto the silage. By gravity action, it will dispense over the surface, and together with the viscosity and its adhesiveness, it will form a layer over, and partly integrate with the silage. After a certain time, the gel will become solid by curing / setting / gelling and will form an airtight film. The curing /setting / gelling could be initiated by a catalyst or by lowering of temperature when exposed to the normal ambient temperature outside (gelatin). The film will be at least airtight. For better integration with the top layer of the silage, the gel could also be rubbed onto the silage.

Also the gel could be sprayed under pressure with a nozzle onto the silage, on which it will stick. By spraying, an equal coverage of the film over the silage could be easily realised. The device for pouring on the gel or for spraying or rubbing could be hand held or could be attached to devices for loading and / or compacting the clamp or to the transport / stacking devices for bales. The advantage is that after that the clamp or stack or parts of that are formed, the coverage can be done immediately. Especially when stacks are formed of bales, the advantage of having a dispensing device on the stacking device is a great advantage since the gel coating can be applied like mortar in a brick wall when stacking the bales onto each other. This is to fill-up the gaps or holes through which oxygen could penetrate after opening the stack at one side.

Integration with a baler could be realised by injecting the gel through holes in the bale forming chamber (a round baler) or press channel (a rectangular baler).

### Physical properties of the gel

The gel should be of an edible type, since it integrates with the outer layer of the silage and can not be removed. It does not need to be nutritious, but this could well be an advantage. The gel is preferably at least partially formed from a 1,2-substituted ethene compound. Alternatively, all gels on an aqueous basis or non-aqueous basis, could be applicable. The gel possibly could contain additives to prevent mould, support the non-permeability for oxygen of the gel, and to add better taste or nutritious value to the gel. The gel additives can be in solid or liquid form, provided that they allow the gel, when set or cured to form a more or less solid airtight (and preferably also watertight) cover layer or coating.

The gel is made as a foam. This is to: (1) make it better to stick to vertical surfaces; (2) give a thicker layer for the same amount of liquid, more economical in use; (3) less chance of non-covered silage area; (4) to let it bridge holes in the surface of the silage; (5) to fill-up gaps and holes in bale stacks more easily; and, (6) to give a more flexible multi-layer surface which is less "cracky", better to chew.

The gel should be sticky with respect to the silage (or if applicable to the edible film when used, for example, as per Figure 4a).

The expansion factor of the foam should be preferably more than 5. The making of the foam could be done by mixing the gel under pressure with a gas and thereafter letting it expand. This gas does preferably not contain oxygen. Also an under pressure liquefied gas (preferably CO² or N²O) could be mixed with the gel. After releasing the pressure in for instance a spray gun, the gel will be incorporated in a foaming form. If a catalyst is needed to cure / set the gel, this preferably could be added just before the expansion, but could also be done after the expansion of the foam by intensively mixing the foam with the catalyst.

## Claims

1. A method of ensilage of a fodder mass and which comprises:
compressing the fodder mass in a bale-forming chamber, or a bale-forming channel, to form a cylindrical or square bale and to expel as much air as possible from the mass with at least part of the outer surface of the mass remaining exposed;
applying a gel foam coating to the exposed surface of the bale, which cures or sets to form a substantially air tight covering of the fodder mass in the bale, and
assembling a number of such bales to form a stack of bales, wherein the gaps between the bales are filled with the foam coating material.

2. A method according to claim 1, in which the foamed coating includes a gel that is at least partially formed from a 1,2-substituted ethene compound.

3. A method according to any one of the preceding claims, in which the coating is made of, or includes a material which is edible, or at least not harmful when consumed by farm animals.

4. A method according to any one of the preceding claims, in which the gel foam is expanded without oxygen.

5. A method according to any one of the preceding claims, in which additives are incorporated in the gel, to provide one or more of
a) prevention of mould;
b) adds nutritional content;
c) improvement of taste;
d) improved air tightness.

6. A method according to any one of the preceding claims, in which the coating is such a character that, when it cures or sets, it also provides a substantially watertight cover to the exposed surface of the mass.

7. A method according to any one of the preceding claims, in which the coating applied to at least part of the outer exposed surface of the mass comprises a film layer and a layer of curable gel.

8. A method according to claim 7, in which the film is made of material which is edible to farm animals.

9. A method according to claim 7 or 8, in which the gel layer cures to form a watertight gel layer.

10. A method according to any one of the preceding claims, in which the coating comprises a gel having a liquid or semi-liquid formulation, and which is transformable into a solid or semi-solid state by curing or setting, by a) provision of a catalyst and /or b) by lowering of the temperature.

11. A method according to any one of the preceding claims, said method comprising:
applying a netting layer, or binding e.g, with twine to at least part of the outer surface of the bale in order to maintain the shape of the formed bale.

12. A method according to claim 11, in which the coating is applied to the bale while it is still resident in the bale-forming chamber or channel.

13. A method according to claim 12, in which the coating is applied to the bale during the application, of the netting layer, or twine to the bale.

14. A method according to claim 12, in which the coating is applied to the bale, after the completion of the application of the netting layer to the bale.

15. A method according to claim 11, in which the coating is applied to the bale after the net-layered or bound bale has been discharged from the bale-forming chamber or channel.

16. A method according to anyone of claims 11 to 15, in which the gel coating is applied to the bale by spraying.

17. A method according to claim 14, in which the gel coating is injected into the bale-forming chamber or channel.

18. A method according to anyone of claims 11 to 17, in which the coating is applied to the bale so as to cover the exposed outer surface of the bale, and also to bridge the gaps between adjacent components of the fodder mass at or near to the surface.

19. A method according to anyone of claims 11 to 18, in which the bale is formed of hay, or partly wilted grass.

20. A method according to any one of the preceding claims, in which a bale handling and / or transportation device is provided with a spraying device for applying the gel coating to the outer surface of the bale.

21. A method according to any one of claims 1 to 10, in which a gel coating is applied to the outer surface of the fodder mass by a hand held spraying device, or by a gel-application machine.

22. An apparatus for forming a compressed bale of a fodder mass and comprising;
a bale-forming chamber or channel;
means for feeding a fodder mass to the chamber or channel;
means for applying a netting layer, or binding to enclose at least part of the outer surface of a bale, after formation of the bale; and
means for applying a gel foam coating to the outer surface of the bale, said coating being of such a nature as to set and form a substantially airtight covering on the bale.

23. Apparatus according to claim 22, in which said means for applying the coating comprises spray jet nozzles arranged to apply the coating in jet form to the outer surface of the bale.

24. Apparatus according to claim 23, in which the jet nozzles are arranged to apply the coating to the outer surface of the bale during, or after the application of the netting layer, or binding to the bale.

25. Apparatus according to claim 23 or 24, in which the jet nozzles are mounted on the apparatus adjacent to the bale-forming chamber or channel, and are arranged to direct the coating onto the outer surface of the bale, and to penetrate the outer surface, whereby upon setting or curing, the coating forms a covering for the entire outer surface of the bale, and which also partly anchors itself into the outer surface of the bale, thereby to contribute also to the maintenance of the shape of the bale.

## Patentansprüche

1. Verfahren zum Silieren einer Futtermasse, das Folgendes beinhaltet:
Komprimieren der Futtermasse in einer Ballenformkammer oder einem Ballenformkanal zum Bilden eines zylindrischen oder quadratischen Ballens und zum Ausdrücken von möglichst viel Luft aus der Masse, wobei wenigstens ein Teil der Außenfläche der Masse exponiert bleibt;
Aufbringen einer Gelschaumbeschichtung auf die exponierte Fläche des Ballens, die erhärtet oder erstarrt, um eine im Wesentlichen luftdichte Abdeckung der Futtermasse in dem Ballen zu bilden, und
Zusammenfügen einer Reihe solcher Ballen zu einem Stapel von Ballen, wobei die Lücken zwischen den Ballen mit dem Schaumbeschichtungsmaterial gefüllt werden.

2. Verfahren nach Anspruch 1, wobei die geschäumte Beschichtung ein Gel enthält, das wenigstens teilweise aus einer 1,2-substituierten Ethenverbindung gebildet wird.

3. Verfahren nach einem der vorherigen Ansprüche, wobei die Beschichtung aus einem Material besteht oder ein solches enthält, das für Bauernhoftiere essbar oder wenigstens nicht schädlich ist, wenn es von solchen verzehrt wird.

4. Verfahren nach einem der vorherigen Ansprüche, wobei der Gelschaum ohne Sauerstoff expandiert wird.

5. Verfahren nach einem der vorherigen Ansprüche, wobei dem Gel Zusatzstoffe für einen oder mehrere der folgenden Zwecke zugegeben werden:
a) Verhüten von Schimmelbildung;
b) Zusetzen von Nährstoffen;
c) Verbessern des Geschmacks;
d) Verbessern der Luftdichtigkeit.

6. Verfahren nach einem der vorherigen Ansprüche, wobei die Beschichtung einen solchen Charakter hat, dass sie nach dem Erhärten oder Erstarren auch eine im Wesentlichen wasserdichte Abdeckung auf der exponierten Oberfläche der Masse bildet.

7. Verfahren nach einem der vorherigen Ansprüche, wobei die auf wenigstens einen Teil der exponierten Außenfläche der Masse aufgebrachte Beschichtung eine Filmschicht und eine Schicht aus härtbarem Gel umfasst.

8. Verfahren nach Anspruch 7, wobei der Film aus einem Material produziert wird, das für Bauernhoftiere essbar ist.

9. Verfahren nach Anspruch 7 oder 8, wobei die Gelschicht zu einer wasserdichten Gelschicht erhärtet.

10. Verfahren nach einem der vorherigen Ansprüche, wobei die Beschichtung ein Gel mit einer flüssigen oder halbflüssigen Formulierung umfasst, die durch Härten oder Erstarren in einen festen oder halbfesten Zustand versetzt werden kann, indem a) ein Katalysator bereitgestellt und/oder b) die Temperatur gesenkt wird.

11. Verfahren nach einem der vorherigen Ansprüche, wobei das genannte Verfahren Folgendes beinhaltet:
Aufbringen einer Netzlage oder eines Einbands z.B. mit Schnur auf wenigstens einen Teil der Außenfläche des Ballens, um die Form des geformten Ballens beizubehalten.

12. Verfahren nach Anspruch 11, wobei die Beschichtung auf den Ballen aufgebracht wird, während sich dieser noch in der/dem Ballenformkammer oder -kanal befindet.

13. Verfahren nach Anspruch 12, wobei die Beschichtung während des Aufbringens der Netzlage oder Schnur auf den Ballen auf diesen aufgebracht wird.

14. Verfahren nach Anspruch 12, wobei die Beschichtung nach vollendetem Aufbringen der Netzlage auf den Ballen auf diesen aufgebracht wird.

15. Verfahren nach Anspruch 11, wobei die Beschichtung nach dem Herausnehmen des mit Netzlage oder Einband versehenen Ballens aus der/dem Ballenformkammer oder -kanal auf den Ballen aufgebracht wird.

16. Verfahren nach einem der Ansprüche 11 bis 15, wobei die Gelbeschichtung durch Sprühen auf den Ballen aufgebracht wird.

17. Verfahren nach Anspruch 14, wobei die Gelbeschichtung in die/den Ballenformkammer oder-kanal injiziert wird.

18. Verfahren nach einem der Ansprüche 11 bis 17, wobei die Beschichtung auf den Ballen aufgebracht wird, um die exponierte Außenfläche des Ballens zu bedecken und auch die Lücken zwischen benachbaren Komponenten der Futtermasse an oder nahe der Oberfläche zu überbrücken.

19. Verfahren nach einem der Ansprüche 11 bis 18, wobei der Ballen aus Heu oder teilgewelktem Gras gebildet ist.

20. Verfahren nach einem der vorherigen Ansprüche, wobei eine Ballenhandhabungs- und/oder-transportvorrichtung mit einer Sprühvorrichtung zum Aufbringen der Gelbeschichtung auf die Außenfläche des Ballens versehen ist.

21. Verfahren nach einem der Ansprüche 1 bis 10, wobei eine Gelbeschichtung mit einer Handsprühvorrichtung oder mit einer Gelauflragsmaschine auf die Außenfläche der Futtermasse aufgebracht wird.

22. Vorrichtung zum Bilden eines komprimierten Futtermasseballens, die Folgendes umfasst:
eine(n) Ballenformkammer oder-kanal;
Mittel zum Speisen einer Futtermasse in die Kammer oder den Kanal;
Mittel zum Aufbringen einer Netzlage oder eines Einbands zum Einschließen von wenigstens einem Teil der Außenfläche eines Ballens nach dem Bilden des Ballens; und
Mittel zum Aufbringen einer Gelschaumbeschichtung auf die Außenfläche des Ballens, wobei die genannte Beschichtung von einer solchen Natur ist, dass sie erstarrt und eine im Wesentlichen luftdichte Abdeckung auf dem Ballen bildet.

23. Vorrichtung nach Anspruch 22, wobei das genannte Mittel zum Aufbringen der Beschichtung Sprühstrahldüsen umfasst, die so angeordnet sind, dass sie die Beschichtung in Strahlform auf die Außenfläche des Ballens Aufbringen.

24. Vorrichtung nach Anspruch 23, wobei die Strahldüsen so angeordnet sind, dass sie die Beschichtung während des oder nach dem Aufbringen(s) der Netzlage oder des Einbands auf den Ballen auf die Außenfläche des Ballens aufbringen.

25. Vorrichtung nach Anspruch 23 oder 24, wobei die Strahldüsen auf der Vorrichtung neben der/dem Ballenformkammer oder-kanal montiert und so angeordnet sind, dass sie die Beschichtung auf die Außenfläche des Ballens richten, so dass sie in die Außenfläche eindringt, so dass die Beschichtung nach dem Erstarren oder Härten eine Abdeckung für die gesamte Außenfläche des Ballens bildet, und die sich auch in der Außenfläche des Ballens teilweise verankert, um dadurch ebenfalls zur Beibehaltung der Form des Ballens beizutragen.

## Revendications

1. Procédé d'ensilage d'une masse de fourrage et qui consiste à :
comprimer la masse de fourrage dans une chambre de mise en balles, ou un canal de mise en balles, pour former une balle cylindrique ou carrée et pour expulser autant d'air que possible de la masse avec au moins une partie de la surface extérieure de la masse restant exposée ;
appliquer un revêtement en mousse de gel sur la surface exposée de la balle, qui durcit ou sèche pour former un recouvrement substantiellement étanche à l'air de la masse de fourrage dans la balle, et
assembler un nombre de telles balles pour former une pile de balles, où les interstices entre les balles sont remplis avec le matériau de revêtement en mousse.

2. Procédé selon la revendication 1, dans lequel le revêtement moussé inclut un gel qui est au moins partiellement formé à partir d'un composé d'éthène 1,2-substitué.

3. Procédé selon une quelconque des revendications précédentes, dans lequel le revêtement est constitué de, ou inclut, une matière qui est comestible, ou du moins pas nocive lorsqu'elle est consommée par des animaux de ferme.

4. Procédé selon une quelconque des revendications précédentes, dans lequel la mousse de gel est expansée sans oxygène.

5. Procédé selon une quelconque des revendications précédentes, dans lequel des additifs sont incorporés dans le gel, afin de fournir une ou plusieurs des caractéristiques suivantes :
a) prévention de la moisissure ;
b) ajout de contenu nutritif ;
c) amélioration du goût ;
d) étanchéité à l'air améliorée.

6. Procédé selon une quelconque des revendications précédentes, dans lequel le revêtement est de nature telle que, lorsqu'il durcit ou sèche, il fournit également un recouvrement substantiellement étanche à la surface exposée de la masse.

7. Procédé selon une quelconque des revendications précédentes, dans lequel le revêtement appliqué sur au moins une partie de la surface extérieure exposée de la masse comprend une couche de film et une couche de gel durcissable.

8. Procédé selon la revendication 7, dans lequel le film est fait de matière qui est comestible pour les animaux de ferme.

9. Procédé selon la revendication 7 ou 8, dans lequel la couche de gel durcit pour former une couche de gel étanche.

10. Procédé selon une quelconque des revendications précédentes, dans lequel le revêtement comprend un gel ayant une formulation liquide ou semi-liquide, et qui est transformable en un état solide ou semi-solide par durcissement ou fixage, par a) fourniture d'un catalyseur et / ou b) par abaissement de la température.

11. Procédé selon une quelconque des revendications précédentes, ledit procédé consistant à :
appliquer une couche de filet, ou lier par ex. avec de la ficelle, sur au moins une partie de la surface extérieure de la balle afin de maintenir la forme de la balle formée.

12. Procédé selon la revendication 11, dans lequel le revêtement est appliqué sur la balle alors qu'elle réside encore dans la chambre ou le canal de mise en balles.

13. Procédé selon la revendication 12, dans lequel le revêtement est appliqué sur la balle lors de l'application de la couche de filet, ou de ficelle sur la balle.

14. Procédé selon la revendication 12, dans lequel le revêtement est appliqué sur la balle, après l'achèvement de l'application de la couche de filet sur la balle.

15. Procédé selon la revendication 11, dans lequel le revêtement est appliqué sur la balle après que la balle à couche de filet ou liée ait été déchargée de la chambre ou du canal de mise en balles.

16. Procédé selon une quelconque des revendications 11 à 15, dans lequel le revêtement de gel est appliqué sur la balle par pulvérisation.

17. Procédé selon la revendication 14, dans lequel le revêtement de gel est injecté dans la chambre ou le canal de mise en balles.

18. Procédé selon une quelconque des revendications 11 à 17, dans lequel le revêtement est appliqué sur la balle de manière à couvrir la surface exposée extérieure de la balle, et aussi pour combler les interstices entre des composants adjacents de la masse de fourrage à la surface ou presque.

19. Procédé selon une quelconque des revendications 11 à 18, dans lequel la balle est formée de foin, ou d'herbe en partie fanée.

20. Procédé selon une quelconque des revendications précédentes, dans lequel un dispositif de manutention et / ou transport de balle est pourvu d'un dispositif de pulvérisation pour appliquer le revêtement de gel sur la surface extérieure de la balle.

21. Procédé selon une quelconque des revendications 1 à 10, dans lequel un revêtement de gel est appliqué sur la surface extérieure de la masse de fourrage par un dispositif portatif de pulvérisation, ou par une machine d'application de gel.

22. Appareil pour former une balle comprimée d'une masse de Fourrage et comprenant :
une chambre ou un canal de mise en balles ;
des moyens pour introduire une masse de fourrage en direction de la chambre ou du canal ;
des moyens pour appliquer une couche de filet, ou lier de manière à entourer au moins une partie de la surface extérieure de la balle, après formation de la balle ; et
des moyens pour appliquer un revêtement en mousse de gel sur la surface extérieure de la balle, ledit revêtement étant d'une nature telle à sécher et à former un revêtement substantiellement étanche à l'air sur la balle.

23. Appareil selon la revendication 22, dans lequel lesdits moyens pour appliquer le revêtement comprennent des buses à jet de pulvérisation disposées pour appliquer le revêtement sous forme de jet sur la surface extérieure de la balle.

24. Appareil selon la revendication 23, dans lequel les buses à jet sont disposées pour appliquer le revêtement sur la surface extérieure de la balle pendant ou après l'application de la couche de filet, ou ligature sur la balle.

25. Appareil selon la revendication 23 ou 24, dans lequel les buses à jet sont montées sur l'appareil adjacent à la chambre ou au canal de mise en balles, et sont disposées pour diriger le revêtement sur la surface extérieure de la balle, et pour pénétrer la surface extérieure, grâce à quoi après le fixage ou le durcissement, le revêtement forme un recouvrement pour toute la surface extérieure de la balle, et qui s'ancre aussi en partie dans la surface extérieure de la balle, afin de contribuer également au maintien de la forme de la balle.
